# EUROPÄISCHE PATENTANMELDUNG

(11) **EP 0 731 043 A1**
(43) Veröffentlichungstag der Anmeldung: **11.09.1996**
(21) Anmeldenummer: 95120103.7
(22) Anmeldetag: 19.12.1995
(51) Int. Cl.: B65G 65/44

(54) **Beschickungsvorrichtung**

(30) Priorität: 28.01.1995 DE 19502602
(71) Anmelder: BRV Technologiesysteme AG/SA, CH-2014 Bôle (CH)
(72) Erfinder: Kapuschinski, Hannes-Jürgen, D-67454 Hassloch (DE)
(74) Vertreter: König, Norbert, Dipl.-Phys. Dr.

(57) **Zusammenfassung**

Eine Beschickungsvorrichtung, insbesondere für klebriges Beschickungsgut, weist einen Tragrahmen und einen im Tragrahmen angeordneten Beschickungstrog mit einem in Förderrichtung geneigten Boden auf. Um eine stets einwandfreie Förderung des Beschickungsgutes zu sichern, ist der Boden (16) des Beschickungstroges (6) pendelbar im Tragrahmen (4) gelagert. Der Boden (16) besteht aus mehreren Bodenelementen (18, 20, 22), deren Neigung getrennt voneinander verstellbar ist.

## Beschreibung

Die Erfindung betrifft eine Beschickungsvorrichtung der im Oberbegriff des Anspruchs 1 genannten Art.

Es ist bekannt, bei Erdsiebtrommeln oder dergleichen Beschickungsvorrichtungen einzusetzen. Die Praxis zeigt, daß sich bei diesen im Beschickungstrichter feuchte und verunreinigte Erde aufbaut und nicht abfließen kann. Dadurch verkleben nach einer Zeit die geraden Wände, und der Auslauf des Trichters setzt sich zu. Ein üblicherweise durch einen Kratzboden oder ein Transportband gebildeter Mitnehmer kann nicht optimal fördern, weil das Siebgut ein Dach bildet, das der Mitnehmer unterläuft. Es ist dann notwendig, die Anlage anzuhalten und das gebildete Dach mit Hilfe von Spaten und Kratzern einzudrücken sowie den Trichterauslauf zu reinigen. Dies ist mühsam und zeitaufwendig.

Aus der DE-OS 38 16 720 ist eine Beschickungsvorrichtung der betreffenden Art bekannt, die einen Beschickungstrog aufweist, dessen Enden offen ausgebildet sind und in dem ein der Trogform angepaßter, nach oben offener Rahmen zwischen den offenen Enden des Beschickungstroges hin- und herbewegbar angeordnet ist. Der Rahmen ist über Seilzüge mit einer von einem in der Drehrichtung umkehrbaren Elektromotor angetriebenen Winde verbunden, durch die der Rahmen in die Hin- und Herbewegung versetzbar ist. Die Umsteuerung der Drehrichtung des Elektromotors erfolgt über Steuermittel.

Bei Betrieb ist der Rahmen über die von dem Elektromotor angetriebene Winde angetrieben. Erreicht der Rahmen bei seiner Hin- und Herbewegung jeweils eines der offenen Enden des Troges, so steuern die Steuermittel die Drehrichtung des Elektromotors um, so daß der Rahmen eine Bewegung zum anderen Ende des Troges ausführt. Bei seiner Hin- und Herbewegung wirkt der Rahmen am Boden und an den Seitenwänden des Beschickungstroges als Scharr- und Kratzvorrichtung und verhindert eine Dachbildung der Erde im Beschickungstrog.

Zur Lagerung des Rahmens sind Gleitlager oder Rollenlager erforderlich. Dies ist aufwendig und damit teuer in der Herstellung.

Ein weiterer Nachteil der bekannten Beschickungsvorrichtung besteht darin, daß bei der Hin- und Herbewegung des Rahmens in dem Beschickungstrog zwischen Rahmen und Beschickungstrog ein hoher mechanischer Verschleiß auftritt. Dieser wird durch in dem Beschickungsgut enthaltene Verunreinigungen wie Steine, Metallreste oder dergleichen, die zwischen Rahmen und Beschickungstrog reiben, weiter erhöht. Der Verschleiß verringert die Lebensdauer der Beschickungsvorrichtung.

Ein weiterer Nachteil der bekannten Beschickungsvorrichtung besteht darin, daß jeweils dann, wenn der Rahmen das eine oder das andere Ende des Beschickungstroges erreicht, eine Umsteuerung der Drehrichtung des Elektromotors durch Steuermittel erforderlich ist. Diese Steuermittel sind aufwendig, so daß die Herstellung dieser bekannten Beschickungsvorrichtung weiter verteuert ist. Darüber hinaus führen die Umsteuervorgänge bei der Drehrichtungsumkehr des Elektromotors zu einer erhöhten Belastung der Motorwicklung.

Es besteht ferner die Gefahr, daß sich größere Fremdkörper, beispielsweise Steine, zwischen Rahmen und Beschickungstrog festsetzen, so daß die Bewegung des Rahmens im Beschickungstrog nicht mehr oder nur gegen einen hohen mechanischen Widerstand möglich ist. Dies führt zu einer weiteren Belastung und möglicherweise zu einer Beschädigung der Motorwicklung.

Der vorliegenden Erfindung liegt die Aufgabe zugrunde, eine Beschickungsvorrichtung der eingangs genannten Art so auszubilden, daß die Nachteile der bekannten Vorrichtungen vermieden sind, insbesondere ein sichererer Betrieb und eine einfache und kostengünstige Herstellung gewährleistet ist sowie eine dosierte Förderung und Abgabe von Beschickungsgut erreichbar ist.

Diese Aufgabe wird durch die im Anspruch 1 angegebene Lehre gelöst.

Die Erfindung geht von der Erkenntnis aus, daß eine Anlagerung von feuchter und verunreinigter Erde oder dergleichen in dem Beschickungstrog durch eine Relativbewegung zwischen dem Boden des Beschickungstroges und dem Beschickungsgut verhinderbar ist. Des weiteren liegt der Erfindung der Gedanke zugrunde, den Boden der Beschickungsvorrichtung zur Förderrichtung geneigt auszubilden und in Bewegung zu versetzen.

Zweckmäßige und vorteilhafte Weiterbildungen der Erfindung sind in den Unteransprüchen gekennzeichnet.

Anhand der beigefügten Zeichnung soll die Erfindung an einem Ausführungsbeispiel näher erläutert werden.

Es zeigt
- Fig. 1: ein Ausführungsbeispiel der erfindungsgemäßen Beschickungsvorrichtung in teilweise geschnittener Seitenansicht,
- Fig. 2: einen Längsschnitt durch die Beschickungsvorrichtung gemäß Fig. 1,
- Fig. 3: eine Ansicht I-I in Fig. 2 und
- Fig. 4: in vergrößerter Darstellung einen Schnitt II-II in Fig. 2.

Gleiche Bauteile in den Figuren der Zeichnung sind mit den gleichen Bezugszeichen versehen.

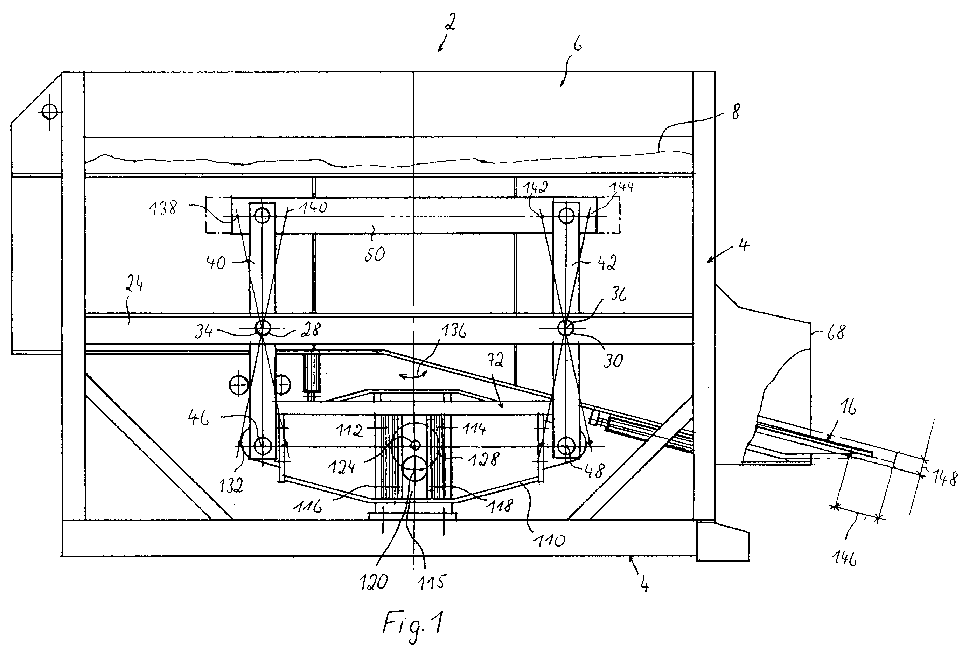

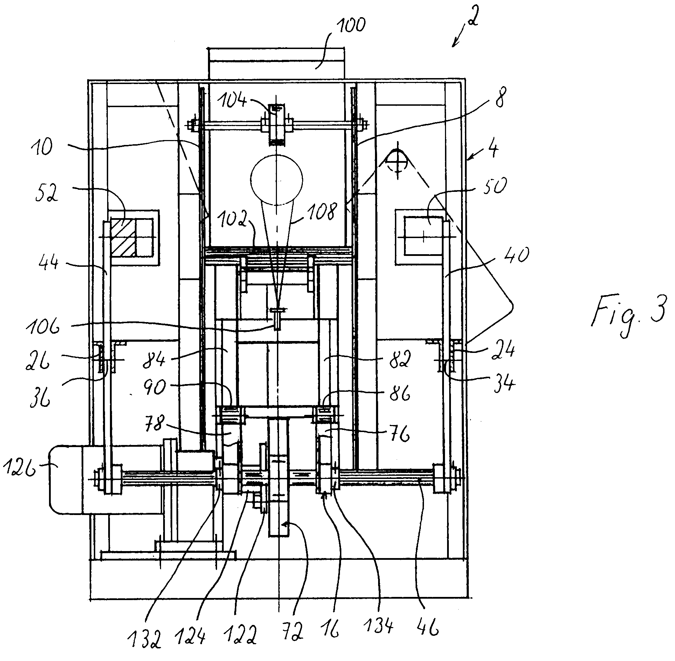

Die Zeichnung zeigt in den Fig. 1 bis 3 eine Beschickungsvorrichtung 2 mit einem äußeren Tragrahmen 4, in dem ein Beschickungstrog 6 angeordnet ist, dessen Seitenwände 8 und 10 innenseitig eine Erdmaterial abweisende Kunststoffbeschichtung 12 und 14, z. B. aus Kaleen 1006, aufweisen, und dessen Boden 16 aus nicht rostendem Stahl (z. B. VA-Stahl) besteht und geneigt angeordnet ist. Der Boden 16 besteht aus drei bewegbar ausgebildeten, in Längsrichtung des Bodens aufeinanderfolgenden Bodenelementen, einem vorderen, einem mittleren und einem hinteren Bodenelement 18, 20 und 22.

Der Tragrahmen 4 weist zwei seitliche Tragholme 24 und 26 auf, in denen jeweils zwei beabstandete horizontale Achslager 28, 30, 32 ausgebildet sind, in denen vermittels Lagerbolzen 34, 36 vier Pendelstangen 40, 42, 44 zwischen ihren Enden gelagert sind. Die unteren Enden der beiden hinteren Pendelstangen 40 und 44 und die unteren Enden der beiden vorderen Pendelstangen, von denen in der Zeichnung nur eine 42 dargestellt ist, sind miteinander durch Achsen 46 und 48 gelenkig verbunden, während die oberen Enden der beiden rechtsseitigen Pendelstangen 40 und 42 und die oberen Enden der beiden hinteren Pendelstangen 42 durch Gegengewichte bildende Querstangen 50 und 52 gelenkig miteinander verbunden sind.

Die Bodenelemente 18, 20 und 22 sitzen auf Untergestellen 54, 56 und 58, die in Form eines Rahmens aus Winkelprofilen ausgebildet sein können.

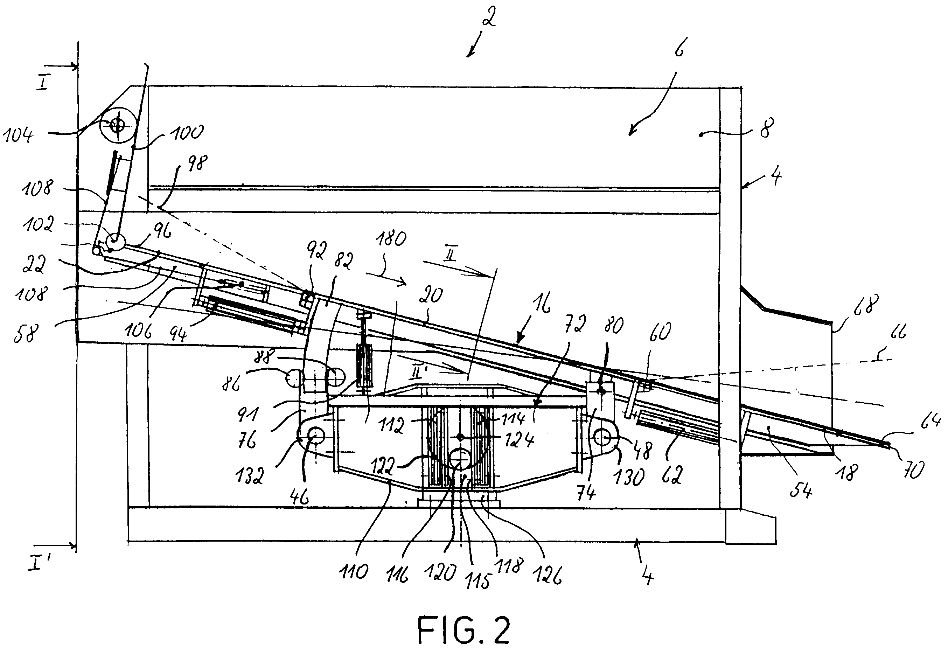

Das vordere Bodenelement 18 ist mit dem mittleren Bodenelement 20 über ein erstes Scharnier 60 verschwenkbar verbunden. Ein Verschwenken des vorderen Bodenelementes 18 erfolgt um die Drehachse des Scharniers 60 vermittels eines ersten Hydraulikzylinders 62, dessen eines Ende mit dem mittleren Bodenelement 20 und dessen anderes Ende mit dem vorderen Bodenelement 18 verbunden ist, wobei das vordere Bodenelement 18 aus einer in der Fig. 2 durchgezogen dargestellten Verschwenklage 64 in eine in Fig. 2 gestrichelt dargestellte Verschwenklage 66 verschwenkbar ist.

Das vordere Bodenelement 18 erstreckt sich durch eine in dem Tragrahmen 4 gebildete Öffnung 68 und kann mit seinem in Förderrichtung vorderen Ende 70 in eine in der Fig. 2 nicht dargestellte zu beschickende Vorrichtung, beispielsweise eine Erdsiebtrommel, hineinragen.

Das Untergestell 56 des mittleren Bodenelementes 20 sitzt auf einer Halterung 72, die zwei vordere Holme, von denen nur einer bei 74 dargestellt ist, und zwei hintere Holme 76 und 78 aufweist. Das vordere Ende des mittleren Bodenelementes 20 ist um eine horizontale Schwenkachse 80 schwenkbar mit den vorderen Holmen 74 der Halterung 72 verbunden.

Das der Schwenkachse 80 abgewandte Ende des mittleren Bodenelementes 20 weist beidseitig im Radius um die Schwenkachse 80 verlaufende Kreiskulissenführungen 82, 84 auf, die durch an den hinteren Holmen 76 und 78 angebrachte Führungsrollen 86, 88 und 90 (in der Zeichnung ist für den Holm 78 nur eine Führungsrolle 90 dargestellt) geführt werden. Das mittlere Bodenelement 20 ist vermittels eines zweiten Hydraulikzylinders 91, der sich am Untergestell 56 des mittleren Bodenelementes und an der Halterung 72 abstützt, um die Schwenkachse 80 verschwenkbar.

Das hintere Bodenelement 22 ist über ein zweites Scharnier 92 mit dem mittleren Bodenelement 20 verschwenkbar verbunden. Ein Verschwenken des hinteren Bodenelementes 22 gegenüber dem mittleren Bodenelement 20 erfolgt mittels eines dritten Hydraulikzylinders 94, dessen eines Ende mit dem mittleren Bodenelement 20 und dessen anderes Ende mit dem hinteren Bodenelement 22 verbunden ist, wobei das hintere Bodenelement 22 aus einer in der Fig. 2 durchgezogen dargestellten Verschwenklage 96 in eine in der Fig. 2 gestrichelt dargestellte Verschwenklage 98 verschwenkbar ist. An dem in Förderrichtung hinteren Ende des hinteren Bodenelementes 22 ist eine hintere Wand 100 des Beschickungstroges 6 über eine Welle 102 gelenkig angebracht. Die Wand 100 liegt unter Federbelastung an einer Stützrolle 104 an. Die Federbelastung ist durch eine Zugfeder 106 gebildet, die über einen Seilzug 108 mit der hinteren Wand 100 verbunden ist. Die gelenkige Verbindung zwischen der hinteren Wand 100 und dem hinteren Bodenelement 22 ist somit auch bei Bewegungen des hinteren Bodenelementes 22 in bezug zu der hinteren Wand 100 gewährleistet.

Die Halterung 72 mit den zwei vorderen und zwei hinteren Holmen 74, 76 und 78, die in Längs- und Querrichtung durch Profile miteinander verbunden sind, weist einen Rahmen 110 auf, in dessen mittigem Bereich zwei zueinander parallele Schwingmetallelemente 112 und 114 angeordnet sind, die eine vertikale Kulissenführung 115 mit gehärteten Laufleisten 116 und 118 aufweist und in der ein durch eine Laufrolle 120 gebildeter Exzenter geführt ist. Die Laufrolle 120 ist über einen Flansch 122 exzentrisch mit einer Abtriebswelle 124 eines Verstellgetriebemotors 126 verbunden, vgl. Fig. 1, 2 und 3. Die Laufrolle 120 beschreibt beim Umlauf den in der Fig. 1 dargestellten Kreis 128.

Am Rahmen 110 befinden sich ferner zwei vordere Lager, von denen in der Zeichnung nur eines 130 dargestellt ist, vgl. Fig. 1 und 2, und zwei hintere Lager 132 und 134, vgl. Fig. 1 bis 3. In den beiden hinteren Lagern 132, 134 ist die untere Verbindungsachse 46 der beiden hinteren Pendelstangen 40, 44, und in den beiden vorderen Lagern 130 ist die Verbindungsachse 48 der beiden vorderen Pendelstangen 42 gelagert. Durch diese Ausbildung ist somit die Halterung 72 und damit der Boden 16 vermittels der Pendelstangen 40, 42, 44 nach Art eines Pendels schwenkbar im Tragrahmen 4 gelagert. Bei rotierender Abtriebswelle 124 rotiert die in der durch die Schwingmetallelemente 112, 114 gebildete Kulissenführung geführte Laufrolle 120 exzentrisch (Kreis 128) um die Abtriebswelle 124, so daß die Halterung 72 und damit der Boden 16 des Beschickungstroges 6 eine Pendelbewegung in Richtung eines Doppelpfeiles 136 ausführt, wobei die Pendelstangen 40, 42, 44 parallel zueinander zwischen Pendellagen 138 und 140 bzw. 142 und 144 hin- und herpendeln, wodurch sich mit 146 und 148 bezeichnete Hubwege des Bodens 16 ergeben, vgl. Fig. 1.

Die Gegengewichte bildenden Querstangen 50 und 52 der Pendelstangen wiegen etwa so viel wie sämtliche schwingenden Teile einschließlich Boden 16. Die vier Achslager 28, 30, 32 in den Tragholmen 24 und 26 tragen über die Pendelstangen und die Achsen 46 den kompletten Boden 16, die Halterung 72 und die Querstangen 50, 52.

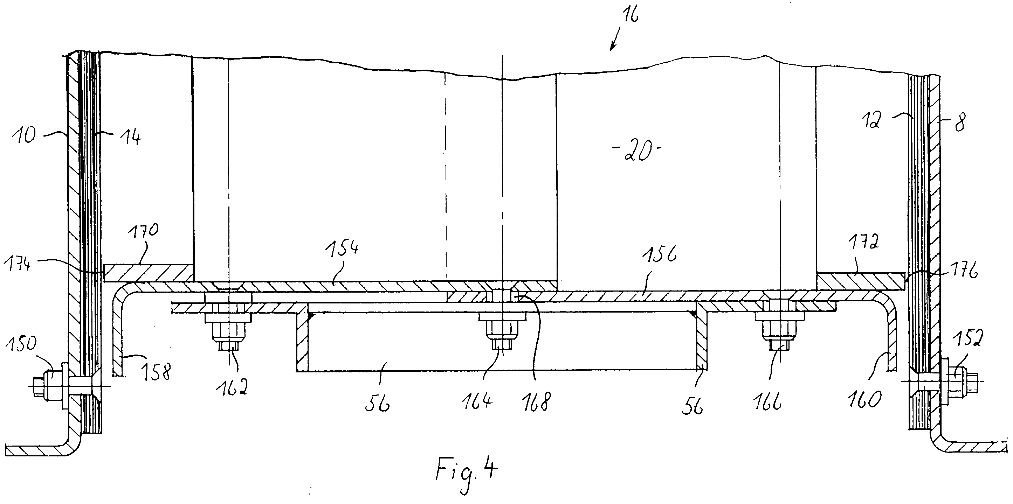

In Fig. 4 ist eine Einzelheit des mittleren Bodenelementes 20 dargestellt. Die Seitenwände 8, 10 des Beschickungstroges 6 weisen jeweils eine Kunststoffverkleidung 12, 14 auf, die über Schraubverbindungen 150, 152 mit diesen verbunden sind. Das mittlere Bodenelement 20 ist durch einander überlappende Bodenbleche 154, 156 gebildet, die an ihrer der Seitenwand 8 bzw. 10 zugewandten Seite jeweils eine Abkantung 158 bzw. 160 aufweisen. Die Bodenbleche 154, 156 sind mittels Schraubverbindungen 162, 164, 166 miteinander und mit dem Untergestell 56 verbunden. Die Schraubverbindungen 162, 164, 166 weisen quer zur Längsrichtung des mittleren Bodenelementes 20 verlaufende Langlöcher auf 168, so daß die Lage der Bodenbleche 154, 156 zueinander und damit die Breite des Bodens einstellbar ist. Zwischen jeweils einem auf die der Seitenwand 8 bzw. 10 zugewandten Seite des Bodenblechs 154 bzw. 156 aufgesetzte Abstandsstücke 170 bzw. 172 und der Seitenwand 8 bzw. 10 ist ein Luftspalt 174 bzw. 176 gebildet, so daß der Boden 16 die Seitenwände 8, 10 nicht berührt. Das vordere Bodenelement 18 und das hintere Bodenelement 22 sind entsprechend aufgebaut.

Bei Betrieb der Beschickungsvorrichtung 2 führt die Halterung 72 und damit der Boden 16 des Beschickungstroges 6 in der oben beschriebenen Weise eine Pendelbewegung aus, wobei die gelenkig mit dem hinteren Bodenelement 22 verbundene hintere Wand 100 des Beschickungstroges die Bewegung nachvollzieht. In die Beschickungsvorrichtung 2 wird von oben her Beschickungsgut eingebracht, das auf den sich bewegenden Boden 16 fällt und aufgrund der Pendelbewegung und der Neigung zur Förderrichtung des Bodens 16 hin in der durch einen Pfeil 180 (Fig. 2) symbolisierten Förderrichtung gefördert wird. Bereits durch die Relativbewegung zwischen dem Boden 16 und den Seitenwänden 8, 10 des Beschickungstroges 6 ist die Gefahr einer Anlagerung von verschmutztem Beschickungsgut, beispielsweise verschmutzter Erde, an die Seitenwände des Beschickungstroges verringert. Da die Seitenwände Verkleidungen 12, 14 aus einem Erdmaterial abweisenden Kunststoff aufweisen, ist die Gefahr einer Anlagerung von Erde oder dergleichen an die Seitenwände weiter verringert. Auf diese Weise ist eine zuverlässige und gleichmäßige Förderung des Beschickungsgutes in der durch den Pfeil 180 symbolisierten Förderrichtung 180 gewährleistet. Vom in Förderrichtung vorderen Ende des vorderen Bodenelementes 18 tritt das Beschickungsgut in die zu beschickende Vorrichtung ein.

Durch Verschwenken des mittleren Bodenelementes 20 um die horizontale Schwenkachse 80 ist die Neigung des Bodenelementes 20 und damit auch der mit diesem verbundenen vorderen und hinteren Bodenelementes 18, 22 verstellbar. Darüber hinaus ist durch Verschwenken des vorderen Bodenelementes 18 und des hinteren Bodenelementes 22 die Neigung dieser Bodenelemente gegenüber dem mittleren Bodenelement 20 verstellbar. Die Form des durch die Bodenelemente 18, 20, 22 gebildeten Bodens 16 ist somit in weiten Grenzen veränderbar. Durch Anpassung der Form und Neigung des Bodens 16 und/oder durch die Pendelbewegung des Bodens ist dieser an die Förderung und die gewünschte Fördermenge von Beschickungsgütern unterschiedlichster Beschaffenheit anpaßbar, so daß stets eine sichere Förderung des Beschickungsgutes und eine sichere und auch dosierbare Beschickung der zu beschickenden Vorrichtung gewährleistet ist.

Es ist auch möglich, während der Pendelbewegung des Bodens 16 die Neigung der Bodenelemente 18, 20, 22 zueinander und zu der Horizontalen zu verstellen, beispielsweise programmgesteuert durch einen Rechner und mit diesem verbundene Steuermittel, die die Hydraulikzylinder ansteuern.

## Patentansprüche

1. Beschickungsvorrichtung, insbesondere für klebriges Beschickungsgut, mit einem Tragrahmen und mit einem im Tragrahmen angeordneten Beschickungstrog, der einen in Förderrichtung geneigten Boden aufweist, **dadurch gekennzeichnet**, daß der Boden (16) des Beschickungstroges (6) pendelbar im Tragrahmen (4) gelagert ist.

2. Beschickungsvorrichtung nach Anspruch 1, **dadurch gekennzeichnet**, daß der Boden (16) durch eine Antriebseinrichtung (126, 120, 72) in eine Pendelbewegung in Förderrichtung des Beschickungsgutes versetzbar ist.

3. Beschickungsvorrichtung nach Anspruch 1 oder 2, **dadurch gekennzeichnet**, daß die Neigung des Bodens (16) verstellbar ist.

4. Beschickungsvorrichtung nach einem der Ansprüche 1 bis 3, **dadurch gekennzeichnet**, daß der Boden durch mehrere in Förderrichtung (Längsrichtung) aufeinanderfolgende Bodenelemente (18, 20, 22) gebildet ist.

5. Beschickungsvorrichtung nach Anspruch 4, **dadurch gekennzeichnet**, daß die Neigung der Bodenelemente (18, 20, 22) getrennt voneinander verstellbar ist.

6. Beschickungsvorrichtung nach Anspruch 1, **dadurch gekennzeichnet**, daß der Boden (16) auf einer Halterung (72) angeordnet ist, die an im Tragrahmen (4) gelagerten Pendelstangen (40, 42, 44) gelenkig aufgehängt ist.

7. Beschickungsvorrichtung nach Anspruch 6, **dadurch gekennzeichnet**, daß in der Halterung (72) eine vertikale Kulissenführung (115) angeordnet ist, in der ein durch einen Motor (126) der Antriebseinrichtung angetriebener Exzenter (120) angeordnet ist.

8. Beschickungsvorrichtung nach Anspruch 7, **dadurch gekennzeichnet**, daß der Exzenter durch eine exzentrisch mit einer Abtriebswelle (124) des Motors (126) verbundene Laufrolle (120) gebildet wird.

9. Beschickungsvorrichtung nach Anspruch 7, **dadurch gekennzeichnet**, daß die Kulissenführung (115) durch zwei in der Halterung (72) angeordnete Schwingmetallelemente (112, 114) gebildet wird.

10. Beschickungsvorrichtung nach Anspruch 3, **dadurch gekennzeichnet**, daß drei Bodenelemente (18, 20, 22) vorgesehen sind, von denen ein mittleres Bodenelement (20) mit der Halterung (72) verbunden ist, und daß ein in Förderrichtung vorderes (18) und ein in Förderrichtung hinteres Bodenelement (22) gelenkig mit dem mittleren Bodenelement (20) verbunden sind.

11. Beschickungsvorrichtung nach Anspruch 10, **dadurch gekennzeichnet**, daß das mittlere Bodenelement (20) im Bereich seines in Förderrichtung vorderen Endes schwenkbar mit der Halterung (72) verbunden ist und an seinem hinteren Ende wenigstens eine in der Halterung (72) geführte Kreiskulissenführung (82, 84) aufweist.

12. Beschickungsvorrichtung nach Anspruch 11, **dadurch gekennzeichnet**, daß die Führung in der Halterung (72) durch wenigstens zwei an der Halterung drehbar gelagerten Führungsrollen (86, 88) erfolgt.

13. Beschickungsvorrichtung nach einem der vorhergehenden Ansprüche, **dadurch gekennzeichnet**, daß die Verstellung der Neigung der Bodenelemente (18, 20, 22) durch Spindeln oder Druckluft- oder Hydraulikzylinder (62, 91, 94) erfolgt.

14. Beschickungsvorrichtung nach einem der vorhergehenden Ansprüche, **dadurch gekennzeichnet**, daß der Beschickungstrog (6) an seinem in Förderrichtung hinteren Ende eine vorgespannte und gelenkig mit dem Boden (16) verbundene Wand (100) aufweist.

15. Beschickungsvorrichtung nach Anspruch 6, **dadurch gekennzeichnet**, daß die Pendelstangen (40, 42, 44) zwischen ihren Enden im Tragrahmen (4) gelagert sind und an ihren den unteren, die Halterung (72) tragenden entgegengesetzten Enden Gegengewichte (50, 52) aufweisen.

16. Beschickungsvorrichtung nach Anspruch 15, **dadurch gekennzeichnet**, daß jeweils zwei vordere (42) und zwei hintere Pendelstangen (40, 44) vorgesehen sind, wobei die unteren Enden der vorderen und die unteren Enden der hinteren Pendelstangen jeweils durch eine Achse (48, 46), auf denen die Halterung (72) drehbar gelagert ist, verbunden und auf diesen drehbar gelagert sind und wobei die oberen Enden der rechtsseitigen und die oberen Enden der linksseitigen Pendelstangen durch die Gegengewichte (50, 52) bildende, drehbar in den Pendelstangen gelagerten Querstangen verbunden sind.

17. Beschickungsvorrichtung nach Anspruch 16, **dadurch gekennzeichnet**, daß die Gegengewichte (50, 52) etwa das gleiche Gewicht aufweisen wie sämtliche von den unteren Enden der Pendelstangen getragenen Bauteile der Beschickungsvorrichtung.

18. Beschickungsvorrichtung nach Anspruch 1, **dadurch gekennzeichnet**, daß die Seitenwände (8, 10) des Beschickungstroges (6) eine Innenauskleidung (12, 14) aus Kunststoff aufweisen.

19. Beschickungsvorrichtung nach Anspruch 18, **dadurch gekennzeichnet**, daß der Kunststoff Kaleen 1006 oder dergleichen ist.

20. Beschickungsvorrichtung nach Anspruch 18, **dadurch gekennzeichnet**, daß die Kunststoffauskleidung lösbar mit den Seitenwänden verbunden ist.

21. Beschickungsvorrichtung nach einem der vorhergehenden Ansprüche, **dadurch gekennzeichnet**, daß der Boden (16) mit Abstand zu den Seitenwänden (8, 10, 12, 14) angeordnet ist.

22. Beschickungsvorrichtung nach Anspruch 21, **dadurch gekennzeichnet**, daß der Boden (16) bzw. die Bodenelemente (18, 20, 22) aus zwei sich überlappenden Längsblechen aufgebaut ist bzw. sind, deren Überlappungsbereich einstellbar ist.
